# EUROPÄISCHE PATENTANMELDUNG

(11) **EP 3 932 193 A1**
(43) Veröffentlichungstag der Anmeldung: **05.01.2022**
(21) Anmeldenummer: 21183163.1
(22) Anmeldetag: 01.07.2021
(51) Int. Cl.: A01K 1/03

(54) **TRÄGERLOSES FUTTERHAUS UND VERFAHREN ZUR HERSTELLUNG DESSELBEN**

(30) Priorität: 01.07.2020 DE 102020117291
(71) Anmelder: Naturhof Schröder GmbH, 32469 Petershagen (DE)
(72) Erfinder: SCHRÖDER, Markus, 32469 Petershagen (DE)
(74) Vertreter: Dantz, Jan Henning

(57) **Zusammenfassung**

Ein trägerloses Futterhaus (1), insbesondere für Nagetiere, umfasst einen schalenförmigen, rohrförmigen oder tunnelförmigen Formkörper (2), wobei das trägerlose Futterhaus (1) aus einer Mischung aus Heu, Stroh, Gras, Kräuter, Blüten und / oder Körner und einem Klebemittel hergestellt ist. Ferner wird ein Verfahren zur Herstellung eines trägerlosen Futterhauses bereitgestellt, bei dem eine Mischung aus Heu, Stroh, Gras, Kräuter, Blüten und / oder Körner mit Klebemittel an einer Form angebracht, getrocknet und dann von der Form gelöst wird.

## Beschreibung

Die vorliegende Erfindung betrifft ein trägerloses Futterhaus, insbesondere für Nagetiere, mit einem schalenförmigen, rohrförmigen oder tunnelförmigen Formkörper und ein Verfahren zur Herstellung eines trägerlosen Futterhauses.

Vorbekannte Futterhäuser für Nager oder Kaninchen bestehen meist aus stützenden Trägerelementen aus Kunststoff oder Kartonage, die mit Materialien, wie Soja, verklebt werden, um Naturmaterialien, wie Heu, Stroh, Gras, Kräuter, Blüten und / oder Körner auf dem Trägerelement aufzubringen. Auch wenn solche Tierhäuser optisch ansprechend ausgestaltet sind, besteht das Problem, dass wiesenfremde Materialien, wie Soja, Kunststoff oder Kartonage, eingesetzt werden, die in den Magen der Tiere gelangen können. Dies kann zu Schäden an dem Tier führen.

Es ist daher Aufgabe der vorliegenden Erfindung, ein trägerloses Futterhaus und ein Verfahren zu dessen Herstellung zu schaffen, bei denen ein kompletter Verzehr des Futterhauses im Hinblick auf das Tierwohl unbedenklich ist und das als Versteck für das Tier dienen kann.

Diese Aufgabe wird mit einem trägerlosen Futterhaus mit den Merkmalen des Anspruches 1 sowie einem Verfahren zur Herstellung eines trägerlosen Futterhauses mit den Merkmalen des Anspruches 9 gelöst.

Erfindungsgemäß ist das trägerlose Futterhaus aus einer Mischung aus Heu, Stroh, Gras, Kräuter, Blüten und / oder Körner und einem Klebemittel hergestellt. Nach dem erfindungsgemäßen Verfahren wird Heu, Stroh, Gras, Kräuter, Blüten und / oder Körner mit einem flüssigen Klebemittel gemischt und an oder in einer Form angebracht, bevor das Material in einem oder mehreren Schritten getrocknet wird, bevor das so hergestellte Futterhaus von der Form gelöst wird. Das so hergestellte Futterhaus besitzt keinen Träger und somit auch kein Trägermaterial aus Kunststoff oder Pappe, das bei einem Verzehr das Tierwohl beeinträchtigen kann. Vielmehr wird die Stabilität des trägerlosen Futterhauses durch das verklebte Heu, Stroh, Gras, Kräuter, Blüten und / oder Körner bereitgestellt.

Der Formkörper ist vorzugsweise vollständig aus getrocknetem Klebemittel und Heu, Stroh, Gras, Kräuter, Blüten und / oder Körner hergestellt, weist also keine weiteren Bestandteile auf, auch wenn an der Außenseite des Formkörpers zur optischen Gestaltung weitere Wiesenbestandteile angebracht werden können.

Der Formkörper des Futterhauses ist vorzugsweise kuppelförmig ausgebildet und weist bevorzugt mindestens eine Zutrittsöffnung auf, durch die das Tier in den Innenraum des Futterhauses gelangen kann. Die Größe der mindestens einen Zutrittsöffnung beträgt vorzugsweise mindestens 10cm², insbesondere zwischen 15 bis 150cm², besonders bevorzugt 20 bis 100cm².

Das Volumen des Formkörpers kann bevorzugt zwischen 0,1 I bis 20 l, insbesondere 0,1 I bis 5 l, beispielsweise 0,5 I bis 20 l, bevorzugt 1 I bis 5 I betragen, wobei das Volumen so gemessen wird, dass der schalenförmige Formkörper umgedreht und unter Einsatz einer dichtenden Folie mit einer Flüssigkeit bis zu dem bodenseitigen Rand befüllt wird, also der Innenraum des Formkörpers ausgehend von einer Bodenauflage gemessen wird.

Die Halme des Heus, Strohs, Gras, der Kräuter, der Blüten und / oder der Körner besitzen bevorzugt eine Länge zwischen 0,1mm bis 15 cm, insbesondere 0,1mm bis 12 cm, oder beispielsweise 1 cm bis 15cm, insbesondere 3 cm bis 12 cm. Durch eine relativ große Länge der Halme und deren Verklebung untereinander kann ein stabiler Aufbau des Formkörpers gewährleistet werden. Wahlweise kann für die Herstellung des Formkörpers nur Heu, Stroh, Gras, Kräuter, Blüten und / oder Körner eingesetzt werden oder eine Mischung aus Heu und Stroh. Vorzugsweise wird für die Herstellung nur Heu eingesetzt, da dies für den Verzehr besser geeignet ist.

Der Formkörper umfasst bevorzugt Pflanzenbestandteile aus Heu, Stroh, Gras, der Kräuter, der Blüten und / oder der Körner, wobei ein Grobanteil der Pflanzenbestandteile Fasern gleich oder länger als 2cm umfasst, und einen Feinanteil, der Fasern und Staub mit einer Länge kleiner 2cm umfasst. Der Feinanteil bezogen auf das Gewicht beträgt vorzugsweise mehr als 80%, insbesondere mehr als 90% der Gesamtmasse, und dementsprechend der Grobanteil, also die längeren Fasern, nur 10% bis 20%, so dass stabile Stützstruktur mit dem Formkörper hergestellt werden kann.

Als Klebemittel wird in einer ersten Variante vorzugsweise Methylzellulose eingesetzt. Ein solches Klebemittel wird aus natürlicher Zellulose gewonnen und ist sowohl als Zusatzstoff für die menschliche Ernährung als auch für Tierfutter (91/248/EWG, Richtlinie der Kommission von 1991 über die Zusatzstoffe in der Tierernährung) zugelassen. Der Einsatz eines solchen Klebemittels gefährdet das Tierwohl nicht, weil der Verdauungstrakt für Nagetiere für pflanzliche Nahrung, wie Gräser, Blätter, Samen und Rinde, ausgelegt ist. Im Enddarm kann mit Hilfe von symbiotischen Bakterien auch Zellulose aufgeschlossen werden. Die eingesetzte Methylzellulose kann Hydroxipropylmethylzellulose sein oder daraus bestehen und wird vor der Verarbeitung mit Wasser vermischt, so dass eine gelförmige flüssige Substanz entsteht.

Gemäß einer Ausführungsform nach einer zweiten Variante wird Johanneskernbrotmehl zur Herstellung des Klebemittels eingesetzt. Das Johanniskernbrotmehl wird mit Wasser gemischt und zu einer flüssigen oder pastösen Masse gemischt. Der Gewichtsanteil von Johanniskernbrotmehl zu Wasser kann beispielsweise in einem Bereich 1:5 bis 1:20 liegen. Nach der Mischung des Klebemittels mit den Naturfasern liegen die Gewichtsanteile bevorzugt in folgenden Bereichen: Mischung aus Pflanzenbestandteilen : Wasser: Johanneskernbrotmehl etwa 5 bis 20 Anteile : 3 bis 10 Anteile : 0,5 bis 1,5 Anteile.

Ferner ist es möglich, zur Herstellung von Klebemittel auch mehr als zwei Materialien einzusetzen, die bevorzugt ausgewählt sind aus den Materialien Guarkernmehl, Johanneskernbrotmehl, Maisstärke, Reisstärke, Kartoffelstärke oder andere pflanzliche Stärken, Xanthan, Hanfmehl, Kichererbsenmehl, Kokosnussmehl, Tapiokastärke, Methylzellulose oder Mischungen daraus. Statt dem Johanneskernbrotmehl können auch andere Verdickungsmittel oder Mischungen aus mehrere Verdickungsmitteln eingesetzt werden.

Der Anteil des flüssigen Klebemittels beim Mischen mit Heu, Stroh, Gras, Kräuter, Blüten und / oder Körner beträgt vorzugsweise mindestens 0,1:1, beispielsweise zwischen 0,2:1 bis 5:1, und gemäß einer Variante zwischen 2,5:1 bis 5:1. Dadurch wird bei der Herstellung des Formkörpers vergleichsweise viel Klebemittel verwendet, um nach dem Trocknen einen stabilen Formkörper zu erhalten. Das Klebemittel kann dabei schon vor dem Anbringen von Heu, Stroh, Gras, Kräuter, Blüten und / oder Körner an dem Formkörper erfolgen, während dem Anbringen oder auch danach.

Das Trocknen des hergestellten Formkörpers an der Form erfolgt vorzugsweise bei einer Temperatur zwischen 50 °C und 150 °C, insbesondere zwischen 70 °C und 130 °C. Der Trocknungsvorgang kann mehrere Stunden in Anspruch nehmen, beispielsweise zwischen 2 Stunden und 12 Stunden. Um das Trocknungsverfahren zu beschleunigen, kann optional ein Umluftofen und/oder eine Mikrowelle eingesetzt werden, um die Form mit dem Formkörper in einem oder mehreren Intervallen zu erhitzen und zu trocknen.

Bevorzugt wird die Form an einer Innenseite des schalenförmigen Futterhauses angeordnet. Auf der Seite der Form ergibt sich eine eher glatte Kontur an dem Formkörper, die weniger natürlich aussieht als die aufgelockerte Oberfläche an der zur Form gegenüberliegenden Seite. Daher wird die aufgelockerte Oberfläche vorzugsweise an der sichtbaren Außenseite des Futterhauses vorgesehen.

Um ein leichteres Ablösen des Formkörpers von der Form zu gewährleisten, kann ein Trennmittel eingesetzt werden, beispielsweise ein silikonbeschichtetes Papier. Der Formkörper kann an der Innenseite durch die Form abgestützt werden und kann an der Außenseite mit einem weiteren Trennmittel bedeckt werden. Optional kann die Form natürlich auch an der Außenseite des Formkörpers angeordnet werden, oder es können sowohl an der Innen- als auch an der Außenseite zwei Formen vorgesehen werden. Das Futterhaus kann vorzugsweise aus einem Material bestehen, das Feuchtigkeit aufnehmen kann. Besonders geeignet ist Karton oder eine Kartonage. Als Formkörper kann auch ein Lochblech, ein Gitter oder ein Formkörper mit Öffnungen eingesetzt werden, der das Trocknen erleichtert. Der Anteil an Öffnungen in dem Formkörper beträgt vorzugsweise mindestens 20% der Oberfläche, an der das geformte Material anliegt.

Die Erfindung wird nachfolgend anhand eines Ausführungsbeispiels mit Bezug auf die beigefügte Zeichnung näher erläutert. Es zeigt:

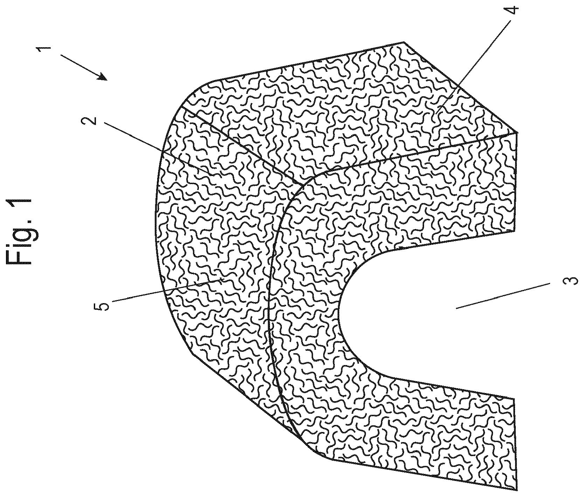

- Figur 1: eine Ansicht eines erfindungsgemäßen trägerlosen Futterhauses.

Ein trägerloses Futterhaus 1 für Tiere, insbesondere Nagetiere oder Hasen, umfasst einen Formkörper 2, der kuppelförmig ausgebildet ist und über Seitenwände 4 auf einem Boden abstützbar ist. In mindestens einer Seitenwand 4, optional auch in mehreren Seitenwänden 4, ist eine Zutrittsöffnung 3 ausgespart, so dass das Tier in einen Innenraum des Formkörpers 2 eintreten kann.

Die Seitenwände 4 sind über ein kuppelförmiges Dach 5 miteinander verbunden. Optional kann die Geometrie des Futterhauses 1 auch abgewandelt werden, damit dieses als länglicher Tunnel, Rohr oder als Brücke eingesetzt wird.

Der Formkörper 2 besteht ausschließlich aus einem Bestandteil aus Halmen aus Heu, Stroh, Gras, Kräuter, Blüten und / oder Körner und einem Klebemittel. Es wird kein Träger eingesetzt, der aus wiesenfremden Materialien hergestellt ist, wie Kunststoff oder Kartonage. An der Oberfläche des Futterhauses 1 können optional noch pflanzliche Dekorelemente angebracht werden.

Die Herstellung des Futterhauses 1 wird nachfolgend beispielhaft erläutert:

### 1. Ausführungsbeispiel

In einem ersten Schritt wurde Heu, Stroh, Gras, Kräuter, Blüten und / oder Körner mit einem Gewicht von etwa 120 g bereitgestellt und mit einem flüssigen Klebemittel aus Methylzellulose (Hydroxypropylmethylzellulose) gemischt. Die so hergestellte Mischung wurde als Schicht um eine schalenförmige Form geformt. Als Form wurde ein Karton eingesetzt, der in etwa die Größe des Innenraumes des später hergestellten Formkörpers besaß. Das gemischte Material wurde an die Form angepresst, und es wurde zusätzlich Klebemittel auf den Formkörper aufgetragen.

Anschließend wurde der so hergestellte weiche Formkörper an der Form getrocknet, wobei hierfür verschiedene Trocknungsverfahren getestet wurden. Eine schonende Trocknung ergibt sich, wenn der Formkörper mit der Form bei 100 °C für fünf Stunden im Trockenschrank getrocknet wird. Alternativ oder zusätzlich ist es möglich, den Trocknungsschritt zu beschleunigen, wenn die Form mit dem Formkörper in einem oder mehreren Intervallen in eine Mikrowelle eingestellt wird, beispielsweise für 34 Minuten bei 850 W.

Nach dem Trocknungsvorgang kann die Form von dem hergestellten Formkörpers entnommen werden, wobei es sich hier als vorteilhaft herausgestellt hat, wenn zwischen der Form und dem Formkörper in Trennmittel eingebracht wird, beispielsweise ein silikonbeschichtetes Papier.

### 2. Ausführungsbeispiel

In einem ersten Schritt wurden Naturfasern aus Heu, Stroh, Gras, Kräuter, Blüten und / oder Körner mit einem Gewicht von etwa 120 g bereitgestellt und mit einem flüssigen Klebemittel gemischt. Das Klebemittel wurde aus einer Mischung aus Johanneskernbrotmehl und Wasser hergestellt.

Die Mischung der Naturfasern und den Anteilen des Klebemittels betrug Naturfasern : Wasser: Johanneskernbrotmehl etwa 10 : 6,5 : 1.

Die so hergestellte zähflüssige Mischung wurde zu einem schalenförmige Formkörper geformt. Als Form wurde ein Lochblech eingesetzt, das in etwa die Größe des Innenraumes des später hergestellten Formkörpers besaß. Das gemischte Material wurde an die Form angepresst.

Anschließend wurde der so hergestellte Formkörper an der Form getrocknet, wobei hierfür warme Umgebungsluft für mehrere Stunden für eine Trocknung verwendet wurde. Nach der Trocknung wurde die Form aus dem Lochblech entfernt.

Der erfindungsgemäße Formkörper des trägerlosen Futterhauses 1 kann vollständig durch ein Tier verzehrt werden, also zu 100 %, ohne dass der Verdauungstrakt des Tieres geschädigt wird.

### Bezugszeichenliste

- 1: Futterhaus
- 2: Formkörper
- 3: Zutrittsöffnung
- 4: Seitenwand
- 5: Dach

## Patentansprüche

1. Trägerloses Futterhaus (1), insbesondere für Nagetiere, mit einem schalenförmigen, rohrförmigen oder tunnelförmigen Formkörper (2), **dadurch gekennzeichnet, dass** das trägerlose Futterhaus (1) aus einer Mischung aus Heu, Stroh, Gras, Kräuter, Blüten und / oder Körner und einem Klebemittel hergestellt ist.

2. Futterhaus nach Anspruch 1, **dadurch gekennzeichnet, dass** der Formkörper (2) vollständig aus getrocknetem Klebemittel und Heu, Stroh, Gras, Kräuter, Blüten und / oder Körnern besteht.

3. Futterhaus nach Anspruch 1 oder 2, **dadurch gekennzeichnet, dass** das Futterhaus (1) kuppelförmig ausgebildet ist.

4. Futterhaus nach einem der vorhergehenden Ansprüche, **dadurch gekennzeichnet, dass** das von dem Futterhaus (1) umschlossene Volumen zwischen 0,1 l bis 20 l, insbesondere 0,2 l bis 5 l, beträgt.

5. Futterhaus nach einem der vorhergehenden Ansprüche, **dadurch gekennzeichnet, dass** die Halme des Heus, Strohs, Gras, der Kräuter, der Blüten und / oder der Körner eine Länge zwischen 1 mm bis 15 cm besitzen.

6. Futterhaus nach einem der vorhergehenden Ansprüche, **dadurch gekennzeichnet, dass** der Formkörper (2) Pflanzenbestandteile aus Heu, Stroh, Gras, der Kräuter, der Blüten und / oder der Körner umfasst, wobei ein Grobanteil der Pflanzenbestandteile Fasern gleich oder länger als 2cm umfasst, und ein Feinanteil der Pflanzenbestandteile Fasern und Staub mit einer Länge kleiner 2cm umfasst, und der Feinanteil mehr als 80 Gewichts-%, insbesondere mehr als 90 Gewichts-% beträgt.

7. Futterhaus nach einem der vorhergehenden Ansprüche, **dadurch gekennzeichnet, dass** das Klebemittel Guarkernmehl, Johanneskernbrotmehl, Maisstärke, Reisstärke, Kartoffelstärke oder andere pflanzliche Stärken, Xanthan, Hanfmehl, Kichererbsenmehl, Kokosnussmehl, Tapiokastärke, Methylzellulose oder Mischungen daraus umfasst.

8. Futterhaus nach einem der vorhergehenden Ansprüche, **dadurch gekennzeichnet, dass** der Formkörper (2) mindestens eine Zutrittsöffnung (3) für Nagetiere enthält.

9. Verfahren zur Herstellung eines trägerlosen Futterhauses (1) für Tiere, mit den folgenden Schritten:
- Mischen von Heu, Stroh, Gras, Kräuter, Blüten und / oder Körner mit einem Klebemittel;
- Anbringen von Heu, Stroh, Gras, Kräuter, Blüten und / oder Körner mit dem Klebemittel an oder in einer Form;
- Trocknen der Form mit dem eingebrachten Material in einem oder mehreren Schritten, und
- Lösen des Futterhauses von der Form.

10. Verfahren nach Anspruch 9, **dadurch gekennzeichnet, dass** der Gewichtsanteil an Klebemittel zu Heu, Stroh, Gras, Kräuter, Blüten und / oder Körner mindestens 0,1:1 ist, insbesondere zwischen 0,2:1 bis 5:1.

11. Verfahren nach Anspruch 9 oder 10, **dadurch gekennzeichnet, dass** das Trocknen bei einer Temperatur zwischen 50 °C und 150 °C stattfindet, insbesondere zwischen 70 °C und 130 °C.

12. Verfahren nach einem der Ansprüche 9 bis 11, **dadurch gekennzeichnet, dass** das Trocknen zumindest teilweise in einem Umluftofen und/oder einer Mikrowelle stattfindet.

13. Verfahren nach einem der Ansprüche 9 bis 12, **dadurch gekennzeichnet, dass** die Form an einer Innenseite des schalenförmigen Futterhauses (1) angeordnet wird.

14. Verfahren nach einem der Ansprüche 9 bis 13, **dadurch gekennzeichnet, dass** zwischen der Form und der Mischung aus Heu, Stroh, Gras, Kräuter, Blüten und / oder Körner ein Trennmittel, beispielsweise ein silikonbeschichtetes Papier, eingebracht wird.

15. Verfahren nach einem der Ansprüche 9 bis 14, **dadurch gekennzeichnet, dass** als Form ein Karton, Kartonage, Papier, Holz, Lochblech, Formkörper aus Kunststoff mit Öffnungen oder ein Vliesstoff verwendet wird.
